# EUROPEAN PATENT SPECIFICATION

(11) **EP 0 536 871 B1**
(45) Date of publication and mention of the grant of the patent: **24.01.1996**
(21) Application number: 92305245.0
(22) Date of filing: 08.06.1992
(51) Int. Cl.: B08B 15/00, B23K 9/32

(54) **Dust collection apparatus**
Staubsammelvorrichtung
Appareil pour assembler de la poussière

(30) Priority: 09.10.1991 JP 102248/91
(43) Date of publication of application: 14.04.1993
(73) Proprietor: NIPPON METAL CO., LTD., Yodogawa-ku, Osaka 532 (JP)
(72) Inventor: Nishiyama,Shinroku, Takarazuka-shi, Hyogo-ken (JP)
(74) Representative: Clifford, Frederick Alan

(56) References cited:
- EP-A- 0 377 942
- US-A- 3 150 404
- US-A- 5 036 754

## Description

### Background of the Invention

### (1) Field of the Invention

The present invention relates to a dust collection apparatus according to the first part of claim 1 and more particularly to such a dust collection apparatus which sucks dust, odors or gas generated in a factory, and discharges same outside.

### (2) Description of the Prior Art

Conventionally, in a factory where dust was generated, a number of discharge fans, which were mounted on the walls of a building of the factory, discharged the dust outside directly or via ducts.

However, in a case of a welding factory, welding locations generating dust, ordors or gas were ordinary dispersed therein.

Therefore, it could not obtain an effective dust proof for welders who were working at places between the welding locations generating dust and gas and the walls of the factory where the discharge fans were positioned. To solve such a problem, it was proposed such a dust collection system that a collection duct was installed independently at the dust and gas generating locations so as to suck the generated dust and gas immediately and discharge same outside via a main suction pump. The collection duct had to include such a construction that it could approach the welding place and be remote away therefrom according to welding conditions. For the purpose, it was proposed that the collection duct was constructed by utilizing a flexible hose of plastices. In this case, the hose was mounted on a support arm which was fixed on a carrier (for instance, US-A- 3,150,404) or a floor of the factory and extended upward.

In the welding factory, however, since the plastice hose sucked sparks and fumes or griding powder, it was easily damaged and could not be used for a long time. Further, when such a dust collection system was large sized for increasing a collection capacity, the support arm could not support a heavy hose and the support arm itself had to be large sized. As the result, there occurred a problem that the collection system per se became larger and larger.

The inventor proposed a duct collection apparatus in Japanese Utility Model Application No. 63-130807 (see also EP-A-0377942), wherein a plurality of metal ducts were disposed to be bendable by utilizing a mechanism like a magic-hand without using a support arm and a plastic hose. This dust collection apparatus comprised as follows. A suction duct connected to a suction pump was connected to a base duct which was fixed on a floor to stand thereon. A rotatable duct was connected rotatably to the base duct and driven by means of a hydraulic cylinder. A first duct arm was pivoted on the upper portion of the rotatable duct so as to be swingable up and down about a horizontal axis. The first duct arm was driven to swing by means of a hydraulic cylinder which was attached to the rotatable duct with one end thereof and to the first duct arm with another end thereof. The forward end of the first duct arm may be bent at a predetermined angle and a second duct arm was pivoted on the forward end of the first duct arm to be able to swing up and down about a horizontal axis. The second duct arm was swung by means of a hydraulic cylinder which was mounted on the first duct arm with one end thereof and the second duct arm with another end thereof. The duct could be close to and remote away from the welding locations within a range covered by operations of the rota table duct and the first and second duct arms. A hood arm was connected to a forward end of the second duct arm to extend in a direction vertical to a longitudinal direction of the second duct arm and it is consrtucted to keep its desired rotated positions.

The dust collection apparatus solved a problem raised in a conventional dust collection apparatus which used a support arm and a plastic hose. However, there should be provided respectively a rota table connection between the rotatable duct, the first and second duct arms, the second duct arm and the hood arm, forming a suction passage therethrough. Further, the second duct arm had to support a weight of the hood arm and the first duct arm had to support weights of the second duct arm and the hood arm. Also, the rotatable duct had to support all of the weights of the first and second duct arms and the hood arm. Of course, an effective discharge could be secured by decreasing an air resistance in the duct. However, the connecting portions between these arms connect the walls of the arms which were faced and rotatably contacted to one another. Therefore, the duct could be deformed due to a weight load acting on the connecting portions and as the result a smooth rotation could not be obtained for these arms unless the duct was made by a heavy and strong steel plate.

Further, such an arm deformation caused a decrease of a suction effect since clearances were formed and widened around the pivots for connecting the arms to one another. For solving the problem, it could provide ribs for reinforcing the connecting portions. However, this construction lowered a suction effect since the ribs increased an air resistance in the duct.

### Summary of the Invention

The present invention has an object to improve a connecting mechanism of a dust collection apparatus which comprises a plurality of metal ducts which are connected bendably to one another, so as to make an air resistance in the duct minimum while connecting the ducts strongly.

To achieve the object, the dust collection apparatus according to the present invention comprises a base duct having a lower end adapted to be connected to a vacuum source, and an upper end, an adapter duct having a lower end rotatably mounted on the upper end of the base duct about a vertical axis and an upper end, first drive means for rotating the adapter duct, a first duct arm having a lower end and an upper end, the lower end and the upper end each having two branches, said first duct arm being pivotally connected to the upper end of the adapter duct to swing up and down about a horizontal axis and formed substantially rectangular in cross section and made of steel plates, a first connecting mechanism for connecting the adapter duct and the first duct arm, second drive means for swinging the first duct arm, a second duct arm having a base end pivotally connected to the upper end of the first duct arm and a forward end, a second connecting mechanism for connecting the first duct arm and the second duct arm, third drive means for swinging the second duct arm, a hood arm having a base end connected to the forward end of the second duct arm and a forward end opened for suction, and a third connecting mechanism for connecting the second duct arm and the hood arm, characterized in that the first connecting mechanism comprises cylindrical holders projecting from the adapter duct in a horizontal direction to have suction passages therein communicating with a suction passage of the adapter duct, two branches of substantially U-shape formed with the lower end of the first duct arm and having suction passages therein, said each branch being provided with an opening in which the cylindrical holder is inserted rotatably, air tight means positioned between each of the openings of the branches and the cylindrical holders, a shaft penetrating the two branches and the adapter duct along a common axis of the cylindrical holders for rotatably connecting the first duct arm to the adapter duct while communicating the suction passages of the two branches with the passage of the adapter duct, and support means arranged in the adapter duct for supporting the shaft.

According to the dust collection apparatus of this invention, although the adapter duct and the first duct arm are made of relatively thin metal plates, the first duct arm may be supported strongly by utilizing the construction of the cylindrical holders and the two branches of the first duct arm without provision of any reinforcing parts except the shaft in the connecting portions while allowing rotation or swing of the first duct arm. There is, however, no problem in providing the shaft since it is originally hard and not easily damaged by sparks, grinding powders and so forth even if it is rotated or not. Therefore, the sucked air including dust, sparks and fumes may flow smoothly from the first duct arm to the adapter duct via the two branches and the cylindrical holders without decreasing a flow rate of the sucked air or increasing an air resistance in the connecting portions.

Further, according to the connecting mechanism of this invention, where the apparatus becomes large sized, the connecting portions of the adapter duct and the first duct arm could not be deformed and made to widen cl erances around the shaft or the connecting portions due to increase of the weights of the first and second duct arms and the hood arm and therefore it could prevent a suction effect of the apparatus from lowering.

Other objects and advantages of this invention will be apparent from the following description with reference to the drawings.

### Brief Description of the Drawings

The drawings show an embodiment of a dust collection apparatus according to the present invention in which:-
Fig. 1 is a perspective view of the apparatus,

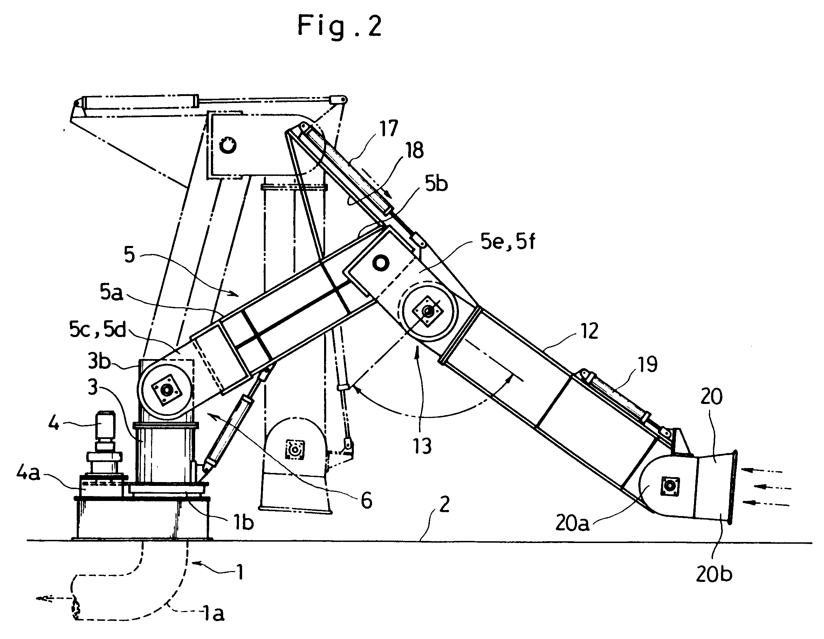

Fig. 2 is a side view of the apparatus showing an operation thereof with phantom lines,

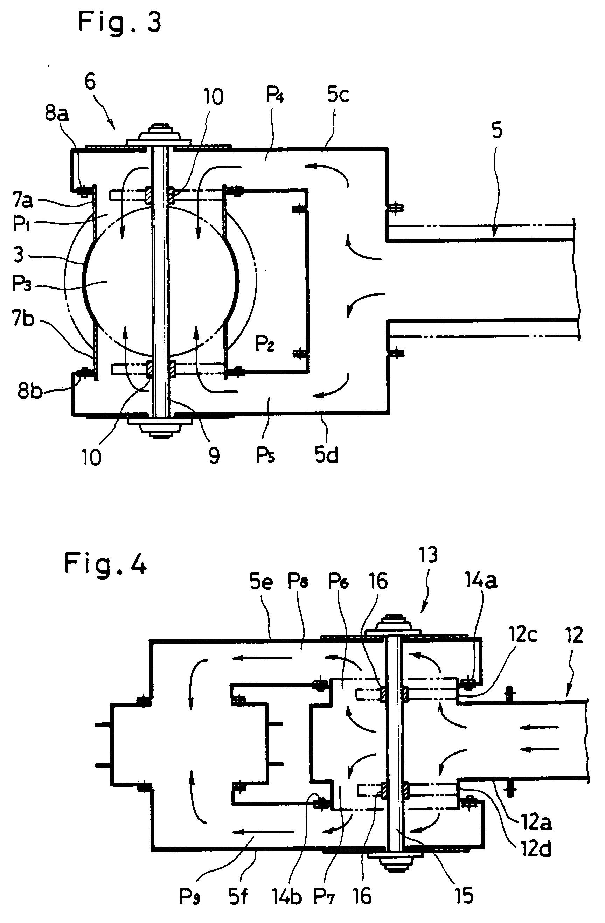

Fig. 3 is a cross sectional view showing a connecting mechanism between an adapter duct and a first duct arm,
Fig. 4 is a cross sectional view showing a connecting mechanism between the first duct arm and a second duct arm, and

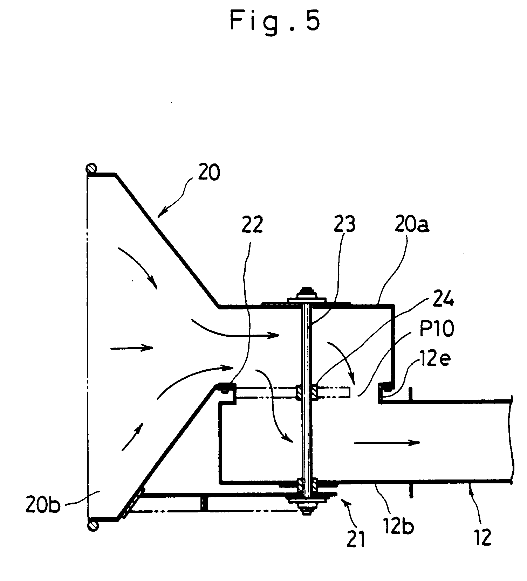

Fig. 5 is a cross sectional view showing a connecting mechanism between the second duct arm and a hood arm.

### Detailed Description of the Embodiment

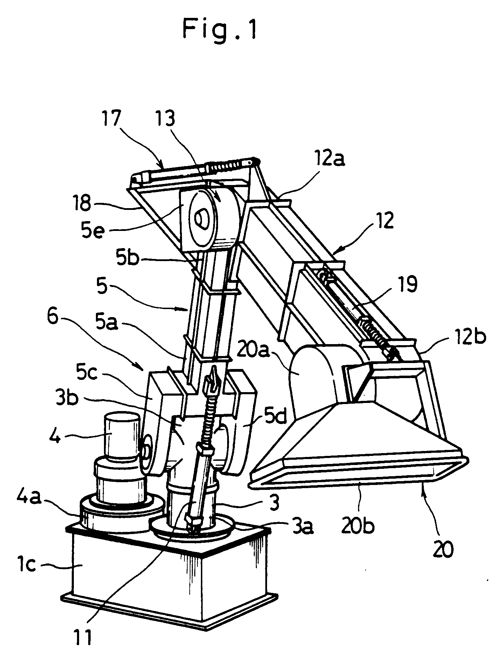

As seen in Fig. 1, a dust collection apparatus comprises as follows. A base duct 1 has a lower end 1a and an upper end 1b, and the lower end 1a is adapted to be connected to a vaccum source which is not shown but ordinary comprises a suction pump. The base duct 1 is normally positioned under a floor 2 or a ground of for example a welding factory and it projects with the upper end 1b from the floor 2 and provides a base box 1c on the floor 2.

An adapter duct 3 has a lower end 3a and an upper end 3b, and the lower end 3a is rotatably mounted on the upper end 1b of the base duct 1 about a vertical axis. An electric motor 4 as first drive means is monted on the base box 1c for rotating the adapter duct 3 by means of a gear mechanism 4a. The electric motor 4 may be substituted for drive means including a hydraulic cylinder.

A first duct arm 5 has a lower end 5a and an upper end 5b both of which are formed to be two branches 5c, 5d, 5e and 5f, respectively. The first duct arm 5 is rotatably connected to the upper end 3b of the adapter duct 3 to swing up and down about a horizontal axis and formed substantially rectangular in cross section and made of relatively thin steel plates.

A first connecting mechanism 6 is provided for connecting the adapter duct 3 and the first duct arm 5. The first connecting mechanism 6 comprises cylindrical holders 7a and 7b projecting from the adapter duct 3 in a horizontal direction to have suction passages P1 and P2 therein, said passages P1 and P2 being communicated with a suction passage P3 of the adapter duct 3. The two branches 5c and 5d of substantially U-shape are formed with the lower end 5a of the first duct arm 5 and provide suction passages P4 and P5 therein. Each of the branches 5c and 5d is provided with an opening in which the cylindrical holder 7a or 7b is inserted rotatably.

Rubber seal plates 8a and 8b in a shape of a ring are positioned as air tight means between each of the openings of the branches 5c and 5d and the cylindrical holders 7a and 7b. The rubber seal plates 8a and 8b are fixed to the first duct arm 5 and extend to fit the peripheries of the cylindrical holders 7a and 7b for making a seal therebetween. There is no problem that a small clearance is formed respectively between the edges of the rubber seal plates 8a and 8b and the peripheries of the cylindrical holders 7a and 7b since such a small clearnce does not lower a suction effect due to an air leak therefrom.

A shaft 9 is positioned to penetrate the two branches 5c and 5d and the adapter duct 3 along a common axis of the cylindrical holders 7a and 7b for rotatably connecting the first duct arm 5 to the adapter duct 3 while communicating the suction passages P4 and P5 of the two branches 5c and 5d with the suction passage P3 of the adapter duct 3. A pair of shaft supporters 10 as support means are arranged in the adapter duct 3 for supporting the shaft 9. The shaft 9 is normally rotatable relative to the shaft supporters 10, but it is possible that the shaft 9 is fixed to the shaft supporters 10 and the two branches 5c and 5d may be mounted rotatably around the shaft 9 and the cylindrical holders 7a and 7b.

A hydraulic cylinder 11 as second drive means is mounted for swinging the first duct arm 5 up and down in such a state that a forward end of a piston rod of the hydraulic cylinder 11 is pivoted to the lower end 5a of the first duct arm 5 and a cylinder thereof is pivoted to the lower end 3a of the adapter duct 3.

A second duct arm 12 has a base end 12a, and a forward end 12b and said base end 12a is pivotally connected to the upper end 5b of the first duct arm 5.

A second connecting mechanism 13 is provided for connecting the first duct arm 5 and the second duct arm 12. The second connecting mechanism 13 comprises cylindrical holders 12c and 12d projecting from the base end 12a of the second duct arm 12 in horizontal direction to have suction passages P6 and P7. The two branches 5e and 5f substantially U-shape are formed with the upper end 5b of the first duct arm 5, and have suction passages P8 and P9 therein. Each of the branches 5e and 5f is provided with an opening in which the cylindrical holder 12c or 12d is inserted rotatably. Further, the branches 5e and 5f have an angle of 110 ∼ 120 degrees with respect to a longitudinal axis of the first duct arm 5.

Rubber seal plates 14a and 14b in a shape of a ring are positioned as air tight means between each of the openings of the branches 5e and 5f and the cylindrical holders 12a and 12b.

The rubber seal plates 14a and 14b are fixed to the branches 5e and 5f and extend to fit the peripheries of the cylindrical holders 12a and 12b for making a seal therebetween.

A shaft 15 is positioned to penetrate the two branches 5e and 5f and the second duct arm 12 along a common axis of the cylindrical holders 12a and 12b for rotatably connecting the second duct arm 12 to the first duct arm 5 while communicating the suction passages P6 and P7 of the cylindrical holders 12a and 12b with the passages P8 and P9 of the two branches 5e and 5f.

A pair of shaft supporters 16 as support means are arranged in the cylindrical holders 12a and 12b for supporting the shaft 16. The shaft 16 is normally rotatable relative to the shaft supporters 10, but it may be mounted in the same manner as that of the shaft 9.

A hydraulic cylinder 17 as third drive means is mounted for swinging the second duct arm 12 up and down in such a state that a forward end of a piston rod of the hydraulic cylinder 17 is pivoted to the base end 12a of the second duct arm 12 and a base end of a cylinder thereof is pivoted to the upper end 5b of the first duct arm 5 via a lever arm 18.

A hood arm 20 has a base end 20a rotatably connected to the forward end 12b of the second duct arm 12, and a forward end 20b opened widely for suction,

A hydraulic cylinder 19 as fourth drive means is provided for swinging the hood arm 20 up and down about a horizontal axis.

A third connecting mechanism 21 is provided for connecting the second duct arm 12 and the hood arm 20. The third connecting mechanism 21 comprises a cylindrical holder 12e projecting from the forward end 12b of the second duct arm 12 in horizontal direction to have a suction passage P10. The base end 20a has an opening in which the cylindrical holder 12e is inserted rotatably.

A rubber seal plate 22 in a shape of a ring is positioned as air tight means between the opening of the base end 20a and the cylindrical holder 12e. The rubber seal plate 22 is fixed to the base end 20a and extend to fit the periphery of the cylindrical holder 12e for making a seal therebetween.

A shaft 23 is positioned to penetrate the forward end 12b of the second duct arm 12 and the base end of the hood arm 20 along a common axis of the hood arm 20 and the cylindrical holder 12e.

A shaft supporter 24 as support means are arranged in the cylindrical holder 12e for supporting the shaft 23. The shaft 23 is normally rotatable relative to the shaft supporter 24, but it may be mounted in another manner which is referred to in the case of the shaft 10.

## Claims

1. A dust collection apparatus comprising a base duct (1) having a lower end (1a) adapted to be connected to a vacuum source, and an upper end (10), an adapter duct (3) having a lower end (3a) rotatably mounted on the upper end of the base duct about a vertical axis and an upper end (3b), first drive means (4) for rotating the adapter duct, a first duct arm (5) having a lower end (5a) and an upper end (5b), the lower end (5a) and upper end (5b) each having two branches, said first duct arm being pivotally connected to the upper end of the adapter duct to swing up and down about a horizontal axis and formed substantially rectangular in cross section and made of steel plates, a first connecting mechanism (6) for connecting the adapter duct and the first duct arm, second drive means (11) for swinging the first duct arm, a second duct arm (12) having a base end (12a) pivotally connected to the upper end of the first duct arm and a forward end (12b), a second connecting mechanism (13) for connecting the first duct arm and the second duct arm, third drive means (7) for swinging the second duct arm, a hood arm (20) having a base end (20a) connected to the forward end of the second duct arm and a forward end (20b) opened for suction, and a third connecting mechanism (21) for connecting the second duct arm and the hood arm, all ducts being interconnected to form a suction passage, characterized in that:
the first connecting mechanism comprises cylindrical holders (7a, 7b) projecting from the adapter duct in a horizontal direction to have suction passages therein communicating with the suction
passage of the adapter duct, two branches (5c,5d) of substantially U-shape formed at the lower end of the first duct arm and having suction passages therein, said each branch being provided with an opening in which the cylindrical holder is inserted rotatably, air tight means (8a,8b) positioned between each of the openings of the branches and the cylindrical holders, a shaft (9) penetrating the two branches and the adapter duct along a common axis of the cylindrical holders for rotatably connecting the first duct arm to the adapter duct while communicating the suction passages of the two branches with the passage of the adapter duct, and support means (10) arranged in the adapter duct for supporting the shaft.

2. The dust collection apparatus of claim 1, wherein the second connecting mechanism (13) comprises cylindrical holders projecting from the second duct arm in a horizontal direction to have suction passages therein communicating with a suction passage of the first duct arm (5), two branches (5e,5f) of substantially U-shape formed at the upper end of the first duct arm and having suction passages therein, said each branch being provided with an opening in which the cylindrical holder is inserted rotatably, air tight means positioned between each of the openings of the two branches and the cylindrical holders, a shaft (15) penetrating the two branches and the second duct arm along a common axis of the cylindrical holders for rotatably connecting the second duct arm to the first duct arm while communicating the suction passages of the two branches with the passage of the adapter duct, and support means (16) arranged in the cylndrical holders for supporting the shaft.

3. The dust collection apparatus of claim 2, wherein the third connecting mechanism (21) comprises a cylindrical holder projecting from the forward end of the second duct arm (12) in a horizontal direction to have a suction passage therein communicating with a suction passage of the hood arm (20), said cylindrical holder being rotatably inserted in an opening formed with the base end of the hood arm, air tight means positioned between the opening of the base end of the hood arm and the periphery of the cylindrical holder, a shaft (23) penetrating the forward end of the second duct arm and the base end of the hood arm along a common axis thereof for rotatably connecting the second duct arm to the hood arm while communicating the suction passage of the cylindrical holder with the passage of the hood arm, and support means (24) arranged in the cylindrical holder for supporting the shaft.

## Patentansprüche

1. Staubfangvorrichtung, welche folgende Komponenten aufweist: ein Hauptrohr (1), das ein unteres Ende (1a), das mit einer Unterdruckquelle verbunden werden kann, und ein oberes Ende (10) hat, ein Verlängerungsrohr (3), das ein unteres Ende (3a), das um eine senkrechte Achse schwenkbar am oberen Ende des Hauptrohres angebracht ist, und ein oberes Ende (3b) hat. erste Antriebsmittel (4) zum Drehen des Verlängerungsrohres, einen ersten Rohrarm (5), den ein unteres Ende (5a) und ein oberes Ende (5b) hat, wobei das untere Ende (5a) und das obere Ende (5b) jeweils zwei Abzweigungen haben, wobei den erste Rohrarm schwenkbar mit dem oberen Ende des verlängerungsrohres vorbunden ist, um nach oben und unten um eine waagerechte Achse zu schwingen und einen im wesentlichen rechtwinkligen Querschnitt hat und aus Stahlplatten hergestellt wird, einen ersten Verbindungsmechanismus (6), um das Verlängerungsrohr und den ersten Rohrarm miteinander zu verbinden, zweite Antriebsmittel (11), um den ersten Rohrarm zu schwingen einen zweiten Rohrarm (12), der eine Basisseite (12a), die schwenkbar mit dem oberen Ende des ersten Rohrarmes verbunden ist, und ein vorderes Ende (12b) hat, einen zweiten Verbindungsmechanismus (13), um den ersten Rohrarm und den zweiten Rohrarm miteinander zu verbinden, dritte Antriebsmittel (7), um den zweiten Rohrarm zu schwingen, einen Haubenarm (20), den eine Basisseite (20a), die mit dem vorderen Ende des zweiten Rohrarmes verbunden ist, und ein vorderes Ende (20b) hat, das zum Saugen offen ist, und einen dritten Verbindungsmechanismus (21), um den zweiten Rohrarm und den Haubenarm miteinander zu verbinden, wobei alle Rohre untereinander verbunden sind, um einen Saugkanal zu bilden, dadurch gekennzeichnet, daß
der erste Verbindungsmechanismus zylindrische Halterungen (7a, 7b) aufweist, die in waagerechter Richtung von dem Verlängerungsrohr vorstehen, um darin Saugkanäle zu bilden, die mit dem Saugkanal des Verlängerungsrohres in Verbindung stehen, am unteren Ende des ersten Rohrarmes zwei Abzweigungen (5c, 5d) gebildet werden, die im wesentlichen U-förmig sind, wobei jede Abzweigung mit einen Öffnung versehen ist, in die drehbar eine zylindrische Halterung eingesetzt ist, wobei zwischen jeder den Öffnungen der Abzweigungen und den zylindrischen Halterungen luftdichte Mittel (8a, 8b) vorhanden sind, wobei eine Welle (9) die beiden Abzweigungen und das Verlängerungsrohr längs einer gemeinsamen Achse den zylindrischen Halterungen durchdringt, um den ersten Rohrarm drehbar mit dem Verlängerungsrohr zu verbinden, während die Saugkanäle der zwei Abzweigungen mit dem Kanal des Verlängerungsrohres in Verbindung stehen, und Stützmittel (10) in dem Verlängerungsrohr vorhanden sind, um die Welle zu tragen.

2. Staubfangvorrichtung nach Anspruch 1, bei welcher der zweite Verbindungsmecharismus (13) zylindrische Halterungen aufweist, die in waagerechter Richtung von dem zweiten Rohrarm vorstehen, um die darin befindlichen Saugkanäle mit dem Saugkanal des ersten Rohrarmes (5) zu verbinden, am oberen Ende des ersten Rohrarmes zwei Abzweigungen (5e, 5f) gebildet werden, die im wesentlichen U-förmig sind und Saugkanäle haben, wobei jede der Abzweigungen mit einer Öffnung versehen ist, in welche drehbar die zylindrische Halterung eingesetzt ist, wobei zwischen jeder der Öffnungen der beiden Abzweigungen und den zylindrischen Halterungen luftdichte Mittel angeordnet werden, wobei eine Welle (15) die beiden Abzweigungen und den zweiten Rohrarm längs einer gemeinsamen Achse der Zylindrischen Halterungen durchdringt, um den zweiten Rohrarm drehbar mit dem ersten Rohrarm zu verbinden, während die Saugkanäle der zwei Abzweigungen mit dem Kanal des Verlängerungsrohres in Verbindung stehen, und in den zylindrischen Halterunger Stützmittel (16) angeordnet sind, um die Welle zu tragen.

3. Staubfangvorrichtung nach Anspruch 2, bei welcher der dritte Verbindungsmechanismus (21) eine zylindrische Halterung aufweist, die in waagerechter Richtung vom vorderen Ende des zweiten Rohrarmes (12) vorsteht, um darin einen Saugkanal zu haben, der mit einem Saugkanal des Haubenarmes (20) in Verbindung steht, wobei die zylindrische Halterung drehbar in eine Öffnung eingesetzt ist, die an der Basisseite des Haubenarmes gebildet wird, wobei zwischen den Öffnung der Basisseite des Haubenarmes und dem Umfang der zylindrischen Halterung luftdichte Mittel vorhanden sind, wobei eine Welle (23) das vordere Ende des zweiten Rohrarmes und die Basisseite des Haubenarmes längs einer gemeinsamen Achse durchdringt, um den zweiten Rohrarm drehbar mit dem Haubenarm zu verbinden, während der Saugkanal der zylindrischen Halterung mit dem Kanal des Haubenrohres in Verbindung steht. und in der zylindrischen Halterung Stützmittel (24) vorhanden sind, um die Welle zu tragen.

## Revendications

1. Appareil collecteur de poussières comprenant un conduit de base (1) avec une extrémité inférieure (1a) destinée à être connectée à une source de vide, et une extrémité supérieure (10), un conduit d'adaptation (3) avec une extrémité inférieure (3a) montée par rotation sur l'extremité supérieure du conduit de base autour d'un axe vertical, et une extrémité supérieure (3b), un premier moyen de commande (4) pour faire tourner le conduit d'adaptation, un premier bras de conduit (5) avec une extrémité inférieure (5a) et une extrémité supérieure (5b), l'extrémité inférieure (5a) et l'extrémité supérieure (5b) comportant chacune deux branches, ledit premier bras de conduit étant connecté par pivotement à l'extrémité supérieure du conduit d'adaptation, de sorte à pouvoir pivoter vers le haut et vers le bas autour d'un axe horizontal, le conduit ayant une section pratiquement rectangulaire et étant composé de plaques d'acier, un premier mécanisme de connexion (6) pour connecter le conduit d'adaptation au premier bras de conduit, un deuxième moyen de commande (11) destiné à faire pivoter le premier bras de conduit, un deuxième bras de conduit (12) avec une extrémité de base (12a), connectée par pivotement à l'extrémité supérieure du premier bras de conduit, et une extrémité avant (12b), un deuxième mécanisme de connexion (13) pour connecter le premier bras de conduit au deuxième bras de conduit, un troisième moyen de commande (7), pour faire pivoter le deuxième bras de conduit, un bras de calotte (20) avec une extrémité de base (20a) connectée à l'extrémité avant du deuxième bras de conduit, et une extrémité avant (20b) ouverte en vue de l'aspiration, ainsi qu'un troisième mécanisme de connexion (21) pour connecter le deuxième bras de conduit au bras de calotte, tous les conduits étant interconnectés de sorte à former un passage d'aspiration, caractérisé en ce que:
le premier mécanisme de connexion comprend des poignées cylindriques (7a, 7b) débordant du conduit d'adaptation dans une direction horizontale pour établir une communication entre les passages d'aspiration correspondants et le passage d'aspiration du conduit d'adaptation, deux branches (5c, 5d) ayant pratiquement une forme en U au niveau de l'extrémité inférieure du premier bras de conduit et comportant des passages d'aspiration, chacune desdites branches comportant une ouverture dans laquelle la poignée cylindrique est insérée par rotation, un moyen étanche à l'air (8a, 8b) agencé entre chacune des ouvertures des branches et les poignées cylindriques, un manche (9) pénétrant dans les deux branches et dans le conduit d'adaptation le long d'un axe commun des poignées cylindriques, pour connecter par rotation le premier bras de conduit au conduit d'adaptation, tout en établissant une communication entre les passages d'aspiration des deux branches et le passage du conduit d'adaptation, et un moyen de support (10) agence dans le conduit d'adaptation pour supporter le manche.

2. Appareil collecteur de poussières selon la revendication 1, dans lequel le deuxième mécanisme de connexion (13) comprend des poignées cylindriques débordant du deuxième bras de conduit dans une direction horizontale, pour établir une communication entre les passages d'aspiration correspondants et un passage d'aspiration du premier bras de conduit (5), deux branches (5e, 5f), ayant pratiquement une forme en U, formées au niveau de l'extrémité supérieure du premier bras ce conduit et comportant des passages d'aspiration, chacune desdites branches comportant une ouverture dans laquelle la poignée cylindrique est insérée par rotation, un moyen étanche à l'air agencé entre chacune des ouvertures des deux branches et les poignées cylindriques, un manche (15) pénétrant dans les deux branches et le deuxième bras de conduit le long d'un axe commun des poignées cylindriques, pour connecter par rotation le deuxième bras de conduit au premier bras de conduit, tout en établissant une communication entre les passages d'aspiration des deux branches et le passage du conduit d'aspiration, et un moyen de support (16) agencé dans les poignées cylindriques pour supporter le manche.

3. Appareil collecteur de poussières selon la revendication 2, dans lequel le troisième moyen de connexion (21) comprend une poignée cylindrique débordant de l'extrémité avant du deuxième bras de conduit (12) dans une direction horizontale, pour établir une communication entre un passage d'aspiration correspondant et un passage d'aspiration du bras de calotte (20), ladite poignée cylindrique étant insérée par rotation dans une ouverture formée dans l'extrémité de base du bras de calotte, un moyen étanche à l'air agence entre l'ouverture de l'extrémité de base du bras de calotte et la périphérie de la poignée cylindrique, un manche (23) pénétrant dans l'extrémité avant du deuxième bras de conduit et dans l'extrémité de base du bras de calotte le long d'un axe commun correspondant, pour connecter par rotation le deuxième bras de conduit au bras de calotte tout en établissant une communication entre le passage d'aspiration de la poignée cylindrique et le passage du bras de calotte, et un moyen de support (24) agencé dans le support cylindrique pour supporter le manche.
